# EUROPÄISCHE PATENTSCHRIFT

(11) **EP 3 743 737 B1**
(45) Veröffentlichungstag und Bekanntmachung des Hinweises auf die Patenterteilung: **05.04.2023**
(21) Anmeldenummer: 18811205.6
(22) Anmeldetag: 26.11.2018
(51) Int. Cl.: G01S 7/481, G06K 9/00, B60Q 3/00, G01B 11/24, B60R 21/015

(54) **VORRICHTUNG UND VERFAHREN ZUR ERMITTLUNG VON INFORMATIONEN IN EINEM KRAFTFAHRZEUG MITTELS EINES 3D SENSORS MIT HOLOGRAPHISCHEM SPIEGEL**
DEVICE AND METHOD FOR DETERMINING INFORMATION IN A MOTOR VEHICLE BY MEANS OF A 3-D SENSOR WITH A HOLOGRAPHIC MIRROR
DISPOSITIF ET PROCÉDÉ DE CALCUL D'INFORMATIONS DANS UN VÉHICULE AUTOMOBILE AU MOYEN D'UN CAPTEUR EN 3D À MIROIR HOLOGRAPHIQUE

(30) Priorität: 26.01.2018 DE 102018201201
(43) Veröffentlichungstag der Anmeldung: 02.12.2020
(73) Patentinhaber: Robert Bosch GmbH, 70442 Stuttgart (DE)
(72) Erfinder: HOECKH, Simone, 71272 Renningen (DE); HARTMANN, Stefanie, 72108 Rottenburg Am Neckar (DE)
(86) Internationale Anmeldenummer: PCT/EP2018/082515
(87) Internationale Veröffentlichungsnummer: WO 2019/145069

(56) Entgegenhaltungen:
- WO-A1-2012/034881
- DE-A1- 19 644 565
- DE-A1-102013 221 506
- US-A- 5 710 671

## Beschreibung

Die vorliegende Erfindung betrifft ein Kraftfahrzeug mit einer Vorrichtung zur Ermittlung von Informationen in zumindest einem Teilbereich eines Innenraumes eines Kraftfahrzeugs, wie im Anspruch 1 definiert.

### Stand der Technik

Kraftfahrzeuge werden zunehmend mit Assistenzsystemen, Sicherheitssystemen oder sogar mit autonomen Fahrsystemen ausgestattet. Vor dem Hintergrund dieses teil- oder hochautomatisierten Fahrens gewinnt die Fahrzeuginnenraumbeobachtung zunehmend an Bedeutung. Idealerweise sollten dabei 3D-Daten aller Insassen erfasst werden. Die Erfassung dieser Daten ist u.a. relevant hinsichtlich Passive Safety. Beispielsweise soll die Art und Weise des Aufgehens eines Airbags an den zu schützenden Insassen angepasst werden. Seat Belt Reminder sollen nur aktiviert werden, wenn auf dem entsprechenden Sitz tatsächlich ein Mensch sitzt. Die Funktion von Sicherheitsgurten soll an extreme Körperhaltungen (Füße auf dem Armaturenbrett, Knie an die Rückenlehne des Vordersitzes geklemmt, liegend, ...) angepasst werden. Darüber hinaus können Komfort- und Infotainment-Funktionen an die jeweiligen Insassen automatisch angepasst werden, wenn diese erkannt werden und bekannt sind. Außerdem werden im Rahmen von neuen HMI-Konzepten vermehrt Gestensteuerungen eingesetzt, für die die Erfassung von hochaufgelösten 3D-Daten vorteilhaft ist. Eine Möglichkeit, solche Daten zu erfassen, ist der Einsatz von ToF-Kameras (Time-of-Flight Kameras), die mit Licht im nahinfraroten Bereich, z.B. mit einer Wellenlänge 850 nm oder 940 nm, arbeiten.

Der Einbau eines optischen Sensors mit fisheye-Linsen in der Mitte des Dachhimmels wird von Automobilherstellern abgelehnt, weil sich ein solches Konzept nicht für Fahrzeuge mit Panoramadach oder Cabrios eignet. Ein in Position des Rückspiegels angebrachter optischer Sensor kann hingegen aus geometrischen Gründen nicht die komplette Rückbank, geschweige denn etwaige weitere Sitzreihen erfassen, da die Frontsitze große Raumbereiche verdecken. Jedoch stellt bspw. die Identifikation von kleinen Kindern auf der Rückbank, ggf. in rückwärts ausgerichteten Kindersitzen, einen relevanten und schwer zu lösenden Anwendungsfall dar.

Holographische Elemente sind aus der Optik bekannt. Im Gegensatz zu konventionellen Optiken wird bei holographisch optischen Elementen, welche als Volumenhologramme realisiert werden, die Strahlumlenkung nicht durch Brechung vorgegeben, sondern durch Beugung am Volumengitter. Die holographisch optischen Elemente lassen sich sowohl in Transmission als auch in Reflexion fertigen und durch die freie Wahl von Einfalls- und Ausfalls- bzw. Beugungswinkel ermöglichen sie neue Bauformen. Das holographische Beugungsgitter wird dabei in eine dünne Folie (holographische Material 6 µm - 200 µm + Trägersubstrat >60 µm) belichtet, bildet dort Bragg-Gitter aus und erreicht theoretisch eine Effizienz von 100%. Durch die Volumenbeugung kann den holographisch optischen Elementen zusätzlich noch eine charakteristische Wellenlängen- und Winkelselektivität oder auch Filterfunktion zugeordnet werden. Abhängig von der Aufnahmebedingung (Wellenlänge, Winkel) wird nur Licht aus definierten Richtungen und mit definierten Wellenlängen an der Struktur gebeugt

Aus der DE 196 44 565 A1 ist eine Überwachungsschaltung zur Überwachung bewegter Objekte bekannt.

Aus der DE 10 2013 221506 A1 ist eine Entfernungsmessvorrichtung bekannt.

Aus der WO 2012/034881 A1 ist ein lidar imager bekannt.

Aus der US 5 710 671 A ist eine Vorrichtung zum Ermitteln der Informationen im Innenraum eines Kraftfahrzeugs bekannt, die Vorrichtung aufweisend eine Lichtquelle, einen Sensor und zwei Fresnel Linsen, jeweils für die Lichtquelle und für den Sensor.

Die Vorrichtung ist am Fahrzeugshimmel positioniert.

### Offenbarung der Erfindung

Vorteilhafterweise ermöglicht die erfindungsgemäße Vorrichtung eine Erweiterung des Aufnahmebereichs eines Sensors auf mehrere zusätzliche Teilbereiche eines Innenraums.

Ermöglicht wird dies gemäß der Erfindung durch die in den unabhängigen

Patentansprüchen angegebenen Merkmale. Weitere Ausgestaltungen der Erfindung sind Gegenstand von Unteransprüchen.

Die erfindungsgemäße Vorrichtung zur Ermittlung von Informationen in zumindest einem Teilbereich eines Innenraumes eines Kraftfahrzeugs, wobei das Kraftfahrzeug eine Lichtquelle zur Beleuchtung des Innenraums aufweist und die Beleuchtung mittels Lichtstrahlen erfolgt, welche durch die Lichtquelle emittiert werden, wobei die Lichtstrahlen einem Sendepfad von der Lichtquelle hin zu dem zu beleuchtenden Teilbereich des Innenraums folgen, ist dadurch gekennzeichnet, dass das Kraftfahrzeug einen Sensor zur Informationserfassung aufweist und die Informationserfassung mittels Lichtstrahlen erfolgt, welche Daten bezüglich des Teilbereichs des Innenraums enthalten, wobei die Lichtstrahlen einem Empfangspfad von dem beleuchteten Teilbereich des Innenraums hin zu dem Sensor folgen und wobei ein Hologramm zur Beugung der Lichtstrahlen vorhanden und derart positioniert ist, dass das Hologramm ein Beugen der Lichtstrahlen sowohl entlang des Sendepfades als auch entlang des Empfangspfades ermöglicht.

Hierunter wird verstanden, dass Daten aus einem Teilbereich des Innenraums erfasst werden. Hierbei kann es sich bspw. um allgemeine Informationen bzgl. des Innenraums handeln (bspw. Sitzbelegung) oder um die Ermittlung (bspw. Identifikation) eines Insassen handeln und/oder die Beobachtung (Monitoring) dessen Körperhaltung, Gestik, Kopforientierung, Mimik oder ähnliches. Die ermittelten Daten können dabei auch dreidimensionale Daten sein. Zur Ermittlung dieser Daten wird bspw. die eine 3D-Kamera eingesetzt, bspw. eine Time-of-Flight-Kamera. Als Hologramm ist ein Reflexionshologramm vorgesehen. Als Hologramm wird auch ein Gesamtsystem mehrerer Hologramme (bspw. Schichtverbund mehrerer Hologramme) verstanden und/oder die Integration in Komponenten des Fahrzeughimmels (bspw. Aufbringung des Hologramms auf eine Glasscheibe im Dachhimmel). Die Positionierung des Hologramms erfolgt weiterhin in Abstimmung mit der Position der Kamera und der Beleuchtungsvorrichtung. Ebenso erfolgt eine Berücksichtigung des zu beobachtenden Teilbereichs, der Wellen- und Winkelselektivität sowie der geplanten Lichtwellenlänge. Unter Positionierung wird sowohl die lokale Position als auch eventuelle Anbringung in einem bestimmten Winkel verstanden. Unter Berücksichtigung der bekannten geometrischen Verhältnisse des Innenraums und der Positionen der Elemente können, bspw. mittels einer Rechnereinheit, die gewünschten Informationen aus den Lichtwellen ermittelt werden, bspw. die Position eines Insassen in einem Teilbereich betreffend. Neben den Begriffen "Sendepfad", bzw. "Empfangspfad" wird häufig auch von Senderichtung oder Sendekanal gesprochen, analog Empfangsrichtung oder Empfangskanal. Der Sendepfad läuft dabei von der Lichtquelle zu dem zu ermittelnden Objekt und der Empfangspfad von dem zu ermittelnden Objekt hin zu dem Sensor. Bei den ausgesendeten Lichtstrahlen kann es sich sowohl um Lichtstrahlen zur reinen Beleuchtung des Innenraums handeln, als auch um Lichtstrahlen zur Aufnahme des Innenraums. In korrekter physikalischer Weise wäre anstelle von Lichtstrahlen natürlich auch nur von Licht zu sprechen, zur Unterstützung der bildlichen Vorstellung der Idee, wird der Begriff Lichtstrahlen verwendet.

In vorteilhafter Weise kann hiermit ein System zur Beobachtung eines spezifischen Teilbereichs des Innenraums geschaffen werden. Insbesondere wird hiermit mit einfachen Mitteln eine Beobachtung eines Innenraumes ermöglicht, welcher aufgrund der Position der Kamera nicht direkt erfasst werden kann. Weiterhin ist ein flexibler Einsatz des Systems möglich, da das Hologramm für Fahrzeuge mit unterschiedlichen geometrischen Abmessungen angepasst werden kann. Durch die Wirkung des Hologramms in zwei Richtungen kann dieses sowohl zur Beleuchtung des Teilbereichs entlang des Sendepfades als auch zur Rückleitung der Lichtstrahlen entlang des Empfangspfades eingesetzt werden. Das System ermöglicht eine Kostenreduktion, da die Erfassung aller Teilbereich oder Insassen mit nur einem (oder mit wenigen) Sensoren erfolgen kann. Weiterhin ist keine zusätzliche Lichtquelle in dem zu analysierenden Teilbereich notwendig. Durch die reduzierte Zahl der Komponenten ergibt sich auch eine Bauraumreduktion. Da durch das System nicht nur die Passagiere der Frontreihe erkannt werden können, ergibt sich eine Steigerung des Komforts der Insassen auf den hinteren Sitzreihen - bspw. durch eine automatische Anpassung von Infotainment- und Komfortfunktionen. Weiterhin zeichnet sich die vorgeschlagene Lösung durch eine geringe Kostenstruktur aus - neben der reduzierten Anzahl an Komponenten sind auch die eingesetzten Hologramme relativ preiswert. Weiterhin reduziert die Winkel- und Wellenselektivität der Hologramme ein Störlicht durch Umgebungslicht, so dass die ermittelten Daten eine hohe Qualität aufweisen.

In einer vorteilhaften Ausführungsform ist die Vorrichtung dadurch gekennzeichnet, dass der Sensor zur Informationserfassung eine 3D-Kamera umfasst.

Hierunter wird verstanden, dass dreidimensionale Daten über den Teilbereich ermittelt werden. Hierzu werden sogenannte 3D-Kameras eingesetzt. Bspw. kann eine Time-of-Flight Kamera verwendet werden. Diese weist spezielle Imager mit speziellen Pixeln auf und ermittelt die benötigte Zeit eines Lichtstrahls zwischen Emission und Rücklauf, woraus Distanzen ermittelt werden können. Durch eine komplette dreidimensionale Erfassung aller Teilbereich und Insassen kann die Sicherheit weiter gesteigert werden, bspw. durch spezielle Adaptionen hinsichtlich der passiven Sicherheit.

Die Vorrichtung ist dadurch gekennzeichnet, dass das Hologramm am Fahrzeughimmel positioniert ist.

Wie bereits angesprochen, ist der Begriff "Positionierung" im weiten Sinne zu verstehen, bspw. wie das Hologramm eingebracht, aufgebracht, angebracht, integriert, etc. ist. Vorteilhaft kann sich durch diese Positionierung - bspw. mittels einer Kamera, welche in Position des Rückspiegels angebracht ist - die Rückbank geometrisch komplett erfassen. Es erfolgt keine Verdeckung des optischen Pfads durch die Vorderreihe. Vorteilhaft ist das Hologramm auch bei Fahrzeugen mit einem Panoramadach an diesem positionierbar, da das Panoramadach für sichtbares Licht transparent bleibt.

In einer bevorzugten Ausführung ist die Vorrichtung dadurch gekennzeichnet, dass die von der Lichtquelle emittierten Lichtstrahlen an einem optischen Element in Richtung des Hologramms umgelenkt werden.

Als optisches Element ist ein Objektiv oder eine sonstige Optik zu verstehen, welche eine spezifische Formgebung oder spezifische Materialkombinationen aufweist und damit definierte Eintritts- und Austrittswinkel ermöglicht. Die optischen Elemente sind an oder in unmittelbarer Nähe zur Beleuchtungsvorrichtung und/oder zum Sensor positioniert und/oder angebracht sind. Die optischen Elemente sind ebenfalls in mehrere Richtungen wirkend, das heißt sie ermöglichen die Leitung und Umlenkung der Lichtwellen entlang des Sende- als auch des Empfangspfades. Hierbei erfolgt in Senderichtung die Umlenkung der Lichtstrahlen in Richtung des Hologramms. Weiterhin erfolgt in Empfangsrichtung die Umlenkung der Lichtstrahlen im Wesentlichen in Richtung des Sensors. Alternativ kann mittels optischer Elemente auch eine Umlenkung in Richtung eines räumlich bekannten vom Sender entfernten Empfängers erfolgen. Vorteilhaft kann hierdurch die Funktionalität des Systems verbessert werden. Es ergeben sich hieraus auch ein erweiterter Gestaltungsspielraum sowie Bauraumvorteile bzgl. der Positionierung und Ausrichtung des Sensors und der Lichtquelle.

In einer alternativen Weiterbildung ist die Vorrichtung dadurch gekennzeichnet, dass mehrere Hologramme vorhanden sind und insbesondere, dass verschiedene Hologramme unterschiedliche Lichtwellenlängen beugen.

Hierunter ist zu verstehen, dass unterschiedliche Teilbereich des Innenraums mittels unterschiedlicher Hologramme beleuchtet oder beobachtet werden können. Bspw. kann hierfür eine Beleuchtung mit polychromatischem Licht erfolgen. An jedem Hologramm werden nur Lichtwellen einer spezifischen Lichtwellenlänge, bzw. eines spezifischen Lichtwellenlängenbereichs gebeugt. Entsprechend der Winkelselektivität des jeweiligen beugenden Hologramms werden die jeweiligen Lichtstrahlen eines spezifischen Lichtwellenlängenbereichs unter einem entsprechenden Ausfallswinkel in einen bestimmten Teilbereich des Innenraums weitergleitet. Vorteilhafterweise kann durch den Einsatz mehrerer Hologramme die Erfassung weiterer Sitzreihen, z.B. einer dritten oder weiteren Sitzreihe, bspw. in einem Bus, erfolgen. Die Positionierung der Hologramme kann bspw. an der gleichen Position im Fahrzeug erfolgen. Selbstverständlich ist vorteilhafterweise auch eine Positionierung zumindest eines oder mehrerer Hologramme an einer zweiten Position und/oder an weiteren Positionen denkbar.

In einer vorteilhaften Ausgestaltung ist die Vorrichtung dadurch gekennzeichnet, dass die Hologramme als Multiplex-Hologramme oder als Schichtstapel-Einzelhologramme oder als eine Kombination von Multiplex-Hologramme und Schichtstapel-Einzelhologramme ausgebildet sind.

Hierunter ist zu verstehen, dass mehrere Hologramme zur Beugung der Lichtstrahlen vorhanden sind. Jedes Hologramm besitzt hierbei seine eigene Charakteristik. Diese Hologramme können räumlich an der gleichen Stelle positioniert sein. Die Ausführung erfolgt bspw. als Schichtstapel von Einzelhologrammen. Der Einsatz mehrerer Hologramme mit unterschiedlichen Charakteristiken, bspw. Wellenselektivitäten, eignet sich insbesondere in Verbindung mit dem Einsatz von polychromatischem Licht einer Lichtquelle, welche verschiedene Lichtwellenlängen - oder verschiedene Lichtwellenlängenbereiche emittiert. Vorteilhaft kann damit die Effizienz der Einzelhologramme an das System angepasst werden. Bei Multiplex-Hologrammen nimmt die Effizienz mit der Zahl der Hologramme ab. Bei Schichtstapeln bekommt man Probleme mit Streueffekten am Schichtstapel bzw. man hat einen unpraktischen Schichtstapel. Weiterhin kann vorteilhaft ein Farbfilter vor dem Sensor eingesetzt werden.

In einer möglichen Ausführung ist die Vorrichtung dadurch gekennzeichnet, dass die zur Beleuchtung emittierten Lichtstrahlen unterschiedliche Lichtwellenlängen aufweisen.

Hierunter ist zu verstehen, dass Lichtstrahlen mit verschiedenen Lichtwellenlängen eingesetzt werden. Durch die jeweilige Charakteristik eines Hologramms, kommt es dann zu einer Beugung einer bestimmten Lichtwellenlänge am Hologramm in einem bestimmten Winkel. Bspw. können mehrere Hologramme an der gleichen Stelle als Stapelhologramm positioniert sein. Hierbei weisen die einfallenden Lichtstrahlen (Sendepfad) den gleichen Einfallswinkel auf. Eine definierte Lichtwellenlänge wird an dem zugehörigen Hologramm gebeugt und in einem bestimmten Ausfallswinkel ausgegeben. Unterschiedliche Lichtwellen weisen dabei unterschiedliche Ausfallswinkel auf. In analoger Weise erfolgt die Beugung, bzw. Umlenkung, der reflektierten Lichtstrahlen (Empfangspfad). Die Trennung der Informationen am Sensor kann durch einen Einsatz und die Kombination mit einem Farbfilter erfolgen. Vorteilhaft kann durch die hohe Winkel- und Wellenselektivität des Hologramms eine Informationsermittlung in verschiedenen Bereichen des Innenraums erfolgen.

Hierdurch können bspw. verschiedene Teilbereiche des Innenraums beobachtet werden.

In einer bevorzugten Weiterbildung ist die Vorrichtung dadurch gekennzeichnet, dass die Lichtstrahlen als polychromatisches Licht ausgebildet sind, insbesondere, dass eine spektral breite Lichtquelle zur Erzeugung des polychromatischen Lichts eingesetzt wird, oder dass eine Lichtquelle mit mehreren definierten Lichtwellenlängen zur Erzeugung des polychromatischen Lichts eingesetzt wird, oder dass eine spektral schmalbandig emittierende Lichtquelle zur Erzeugung des polychromatischen Lichts eingesetzt wird, deren Lichtwellenlänge durchgestimmt werden kann.

Vorteilhafterweise kann durch die Verbindung von polychromatischem Licht und mehreren Hologrammen mit unterschiedlichen Lichtwellenlängen- und Winkelselektivitäten verschiedene Teilbereiche des Innenraums mit nur einer Lichtquelle und nur einer Kamera aufgenommen und beobachtet werden.

In einer alternativen Ausführungsform ist die Vorrichtung dadurch gekennzeichnet, dass mehrere Lichtquellen vorhanden sind, und insbesondere, dass mehrere Lichtquellen vorhanden sind welche Licht mit unterschiedlichen Lichtwellenlängen emittieren.

Vorteilhaft kann durch die Verwendung von mehreren Lichtquellen, bspw. mit unterschiedlichen Lichtwellenlängen, jeder aufzunehmende Teilbereich des Innenraums individuell ausgeleuchtet werden. Hierdurch können Vorteile hinsichtlich Bauraum und Bauvolumen erzielt werden.

In einer möglichen Weiterbildung ist die Vorrichtung dadurch gekennzeichnet, dass ein Farbfilter vorhanden ist, insbesondere, dass ein schaltbarer Farbfilter zur Selektion definierter Lichtwellenlängen vorhanden ist.

Hierunter ist zu verstehen, dass ein Farbfilter vorhanden und eingesetzt wird, um vor einem Sensor die Informationen aus Lichtstrahlen mit unterschiedlicher Lichtwellenlänge selektiv zu entnehmen. Der Farbfilter ist insbesondere an oder in unmittelbarer Nähe zum Sensor positioniert und/oder angebracht. Bspw. können auch mehrere Farbfilter vorhanden und eingesetzt werden. Weiterhin besteht vorteilhaft eine Zuordnung eines Farbfilters zu definierten Pixeln des Sensors. Alternativ kann auch eine sequentielle Ansteuerung der Lichtquellen erfolgen, bei einer synchronisierten Auswertung der empfangenen Lichtstrahlen im Sensor.

In einer bevorzugten Ausführungsform ist die Vorrichtung dadurch gekennzeichnet, dass mehrere Sensoren vorhanden sind und insbesondere, dass mehrere Sensoren zur Erfassung unterschiedlicher Lichtwellenlängen vorhanden sind.

Hierunter ist zu verstehen, dass ein oder mehrere weitere Sensoren - zumindest weitere Imager - vorhanden sind und eingesetzt werden, um unterschiedliche Teilbereich des Innenraums zu beobachten. Diese zusätzlichen Sensoren werden leicht versetzt zu dem ursprünglichen Sensor (Imager) positioniert angeordnet. Weiterhin können vorteilhafterweise nicht nur ein oder mehrere weitere Sensoren, sondern für jede Kamera auch eine entsprechende Lichtquelle eingesetzt werden.

Weiterhin ist erfindungsgemäß ein Verfahren , im Anspruch 11 definiert, zur Ermittlung von Informationen in zumindest einem Teilbereich eines Innenraumes eines Kraftfahrzeugs vorgesehen.

Bezüglich der weiterführenden Erklärung und Vorteile des Verfahrens sei auf die bisherigen Ausführungen verwiesen.

In einer vorteilhaften Ausführungsform ist das Verfahren dadurch gekennzeichnet, dass eine Ermittlung von dreidimensionalen Daten des Teilbereichs des Innenraums mittels einer 3D-Kameras erfolgt, wobei ein optischer Pfad der 3D-Kamera sowohl in Sendeals auch in Empfangsrichtung an dem Hologramm umgelenkt wird, wobei das

Reflexionshologramm gemäß der Erfindung am Fahrzeughimmel positioniert ist.

Hierunter ist zu verstehen, dass zumindest eine (oder mehrere) 3D-Kameras eingesetzt werden, um bspw. den Teilbereich des Innenraums zu beobachten oder eine Person oder deren Körperhaltung oder Gestik zu identifizieren. Bspw. werden hierfür Time-of-Flight Kameras eingesetzt. Das Hologramm wird am Fahrzeughimmel positioniert, bspw. zwischen den Säulen: A-B und/oder B-C und/oder C-D und/oder A-C. Natürlich ist auch vorstellbar, die Hologramme an verschiedenen Bereich und/oder auch über mehrere Bereiche hinweg anzubringen.

In einer möglichen Ausgestaltung ist das Verfahren dadurch gekennzeichnet, dass Informationen aus einem Teilbereich des Innenraums mittels am Hologramm gebeugten Lichtes ermittelt werden und zusätzlich Informationen aus einem anderen Teilbereich des Innenraums mittels den direkten Weg nehmenden Lichtes ermittelt werden.

Hierunter ist zu verstehen, dass mittels Hologramm Teilbereiche beobachtet werden, die nur mittels einer Beugung des Lichtstrahls - nicht jedoch mittels direkter Lichtstrahlen beobachtet werden können. Das Verfahren ermöglicht also Informationen aus einem Teilbereich des Innenraums mittels am Hologramm gebeugter Lichtstrahlen zu ermitteln, wobei der Teilbereich mittels direkter Lichtstrahlen nicht erfasst werden kann. Darüber hinaus werden aber auch andere Teilbereiche direkt beobachtet. Vorteilhaft kann hierdurch der Aufnahmebereich für einen Sensor erheblich erweitert und weitere Komponenten eingespart werden.

In einer bevorzugten Ausführung ist das Verfahren dadurch gekennzeichnet, dass Informationen aus verschiedenen Teilbereichen des Innenraums ermittelt werden, wobei mehrere Hologramme eingesetzt werden und verschiedene Hologramme Licht unterschiedlicher Wellenlängen beugen, und die Informationsermittlung für jeden Teilbereich über Licht mit einer jeweils definierten Lichtwellenlänge erfolgt.

Hierunter ist zu verstehen, dass jedes Hologramm Licht einer bestimmten Wellenlänge (eigentlich eines kleinen Wellenlängenbereiches) beugt (Wellenlängenselektivität). Weiterhin erfolgt die Beugung von Licht der bestimmten Wellenlänge durch das Hologramm in einer charakteristischen Weise (Winkelselektivität). Das heißt, dass bspw. ein Hologramm Licht einer spezifischen Wellenlänge mit dem Einfallswinkel von 10° auf einen Ausfallswinkel von 30° umlenkt. Andere Lichtwellenlängen werden nicht bzw. nicht in diese Ausfallsrichtung gebeugt. Ein zweites Hologramm beugt hingegen Licht einer anderen Wellenlänge mit einem Einfallswinkel von 10° auf einen Ausfallswinkel von 40°. Jedoch beugte das zweite Hologramm wiederum nicht die erste Lichtwellenlänge. Diese Charakteristik ist selbstverständlich definiert und bekannt. Die Charakteristik kann über die Materialparameter (Dicke der holographischen Schicht und Brechungsindexmodulation) an das jeweilige System / Anforderung angepasst werden. In Kombination mit der bekannten Positionierung der Hologramme ist sehr genau bestimmbar, welcher Teilbereich des Innenraums mit Licht welcher Wellenlänge beobachtet werden kann.

### Ausführungsformen

Es ist darauf hinzuweisen, dass die in der Beschreibung einzeln aufgeführten Merkmale in beliebiger, technisch sinnvoller Weise miteinander kombiniert werden können und weitere Ausgestaltungen der Erfindung aufzeigen. Weitere Merkmale und Zweckmäßigkeit der Erfindung ergeben sich aus der Beschreibung von Ausführungsbeispielen anhand der beigefügten Figuren.

### Von den Figuren zeigt:

Fig. 1 eine schematische Darstellung einer Informationsermittlung mittels einem Hologramm; und
Fig. 2 das Beugungsverhalten eines monochromatischen Lichtstrahls an einem Hologramm; und
Fig. 3 das Beugungsverhalten eines polychromatischen Lichtstrahls an einem Hologramm-Verbund; und
Fig. 4 den Empfangspfad einer ToF-Kamera mit einem Lichtstrahl, der durch ein HOE umgelenkt wird; und
Fig. 5 den Empfangspfad einer ToF-Kamera mit mehreren Lichtstrahlen, die durch einen HOE-Verbund jeweils geeignet umgelenkt werden und einem beispielhaften optischen Element sowie einem Farbfilter; und
Fig. 6 die Verfahrensschritte einer beispielhaften Ausprägung des Verfahrens.

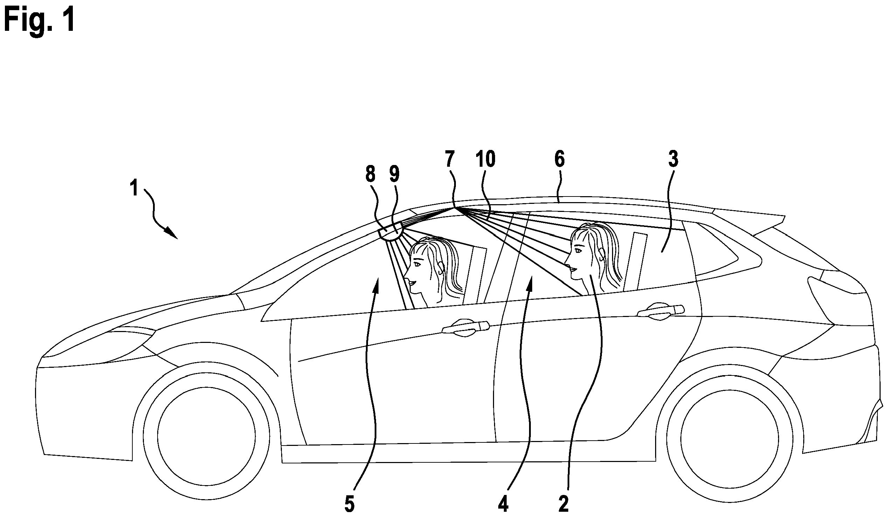

Fig. 1 zeigt eine schematische Darstellung einer Informationsermittlung mittels einem Hologramm. Hierbei ist ein Kraftfahrzeug 1 dargestellt, in dessen Innenraum 3 sich Insassen 2 befinden. Im vorderen Teilbereich 5 des Innenraums 3 befindet sich beispielsweise der Fahrer und im hinteren Teilbereich 4 des Innenraums 3 befindet sich ein Kind. Weiterhin besteht ein Fahrerbeobachtungssystem. Dieses umfasst einen Sensor 8, bspw. eine Time-of-Flight (ToF) Kamera zur dreidimensionalen Erfassung des Innenraums 3 sowie der Insassen 2. Weiterhin ist eine Beleuchtungsvorrichtung 9 vorgesehen, bspw. eine Lichtquelle im nahinfrarotem Bereich. Der Sensor 8 sowie die Beleuchtungsvorrichtung 9 sind dabei in etwa auf der Position des Rückspiegels angebracht. Der Fahrer im vorderen Teilbereich 5 kann aus dieser Position der Kamera direkt beobachtet werden. Zur Beobachtung des Kindes im hinteren Teilbereich 4 muss der optische Pfad jedoch umgelenkt werden. Dies geschieht mittels des Hologramms 7, welches am Dachhimmel 6 des Kraftfahrzeugs positioniert ist. Die Lichtstrahlen 10 werden entsprechend ihrer Wellenlänge und ihrem Einfallswinkel an dem Hologramm 7 gebeugt und weitergeleitet. Mittels dieser Umlenkung am Fahrzeughimmel können auch ansonsten verdeckte Raumbereiche von der Kamera erfasst werden. Die Umlenkung erfolgt sowohl in Richtung des Sendepfades für die Lichtstrahlen 10 zur Beleuchtung des hinteren Teilbereichs 4, als auch in Richtung des Empfangspfades für die Lichtstrahlen, die zurück zum Sensor geführt werden. Da der Weg von der Beleuchtungsvorrichtung 9 zum Hologramm 7 (und zurück) bekannt ist, ebenso wie der Zusammenhang von Einfalls- und Ausfallswinkel am Hologramm 7, bleiben die Tiefenals auch die Richtungs- und Ortsinformationen bei der Umlenkung am Hologramm 7 erhalten.

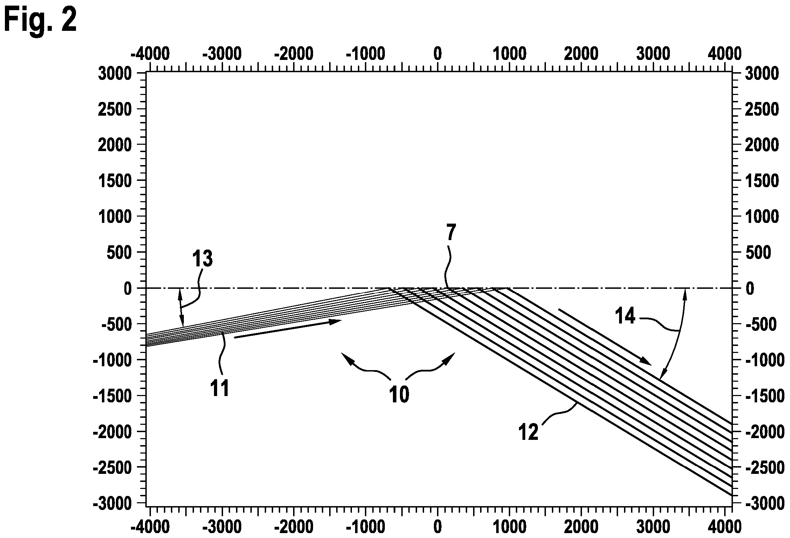

Fig. 2 zeigt ein beispielhaftes Beugungsverhalten eines monochromatischen Lichtstrahls an einem Hologramm. Die Funktionsweise eines Hologramms 7 wird hierbei an dem Beispiel eines 80°-60° Umlenkers gezeigt. Dabei wird ein einfallender Strahl 11 aus 80° (gemessen zur Normalen des Hologramms) am Hologramm 7 zu einem Winkel von 60° (gemessen zur Normalen des Hologramms) gebeugt. Der Beugungswinkel wird dabei durch das holographische Gitter vorgegeben und kann an die jeweilige Fahrzeuggeometrie angepasst werden. Der Ausfallswinkel 14 des gebeugten Strahls 12 ist also abhängig von dem Einfallswinkel 13 des einfallenden Strahls 11 - und selbstverständlich im Allgemeinen auch von der Wellenlänge des Lichtstrahls 10. Durch die charakteristische Wellenlängen- und Winkelselektivität bleibt die Folie des Hologramms 7 für alle anderen Richtungen und Wellenlängen außerhalb des Selektivitätskurve transparent.

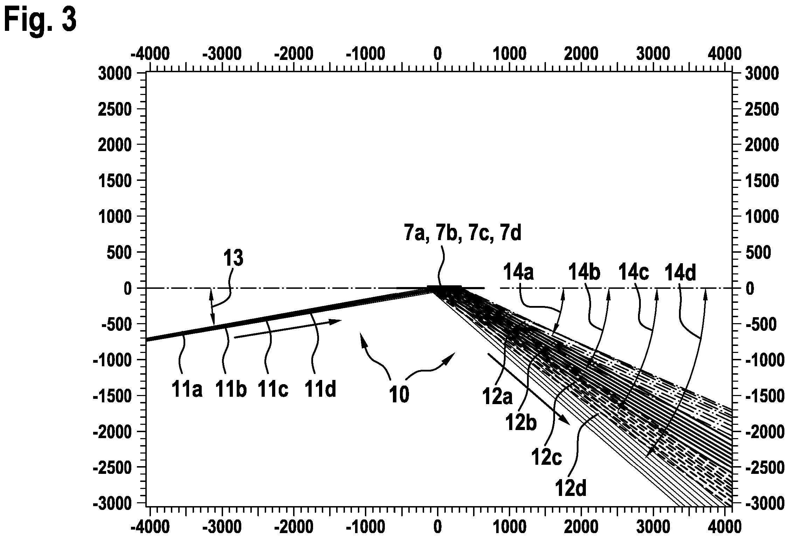

Fig. 3 zeigt weiterhin das Beugungsverhalten eines polychromatischen Lichtstrahls an einem Hologramm-Verbund. Dabei werden mehrere Beugungswinkel (z.B. für die Erfassung unterschiedlicher Sitzpositionen) durch mehrere Hologramme für mehrere Wellenlängen aufgefächert. Dabei entspricht jeder Wellenlängenbereich einem Beugungswinkelbereich. Die Auflösung des Systems wird dabei u.a. durch die Anzahl der Hologramme definiert. Im dargestellten Beispiel finden sich die einfallende Lichtstrahlen 11a, 11b, 11c, 11d mit jeweils einer unterschiedlichen Lichtwellenlänge. Die einfallenden Lichtstrahlen weisen alle denselben Einfallswinkel 13 auf. Diese Lichtstrahlen treffen auf einen Hologramm-Verbund bestehend aus den vier Hologrammen 7a, 7b, 7c, 7d. Die Lichtstrahlen einer definierten Lichtwellenlänge werden an dem (und nur an dem) entsprechenden Hologramm gebeugt und unter dem Ausfallswinkel 14 als gebeugter Strahl 12 weitergeleitet. So wird bspw. Lichtstrahl 11a an dem Hologramm 7a gebeugt und wird als Lichtstrahl 12a unter dem Winkel 14a weitergleitet. In analoger Weise gilt dies auch für die weiteren Lichtstrahlen und Hologramme.

Die unterschiedlichen Einzelhologramme können entweder als sogenannte Multiplex-Hologramme in eine Schicht gespeichert (d.h. umgesetzt) werden, als Schichtstapel aus Einzelhologrammen oder aus einer Kombination von beidem (angepasst an die jeweilige Systemkonfiguration). Durch die geschickte Wahl der Materialparameter kann die Selektivität der Einzelhologramme so angepasst werden, dass das Einzelhologramm nur Licht der korrelierenden Wellenlänge beugt. Das Hologramm oder der Schichtstapel kann auch gleichzeitig für den Rückkanal verwendet werden. Optische Strahlwege sind umkehrbar und das Hologramm bündelt die reflektierten Strahlen und schickt sie gerichtet in Richtung Quelle, bzw. Sensors.

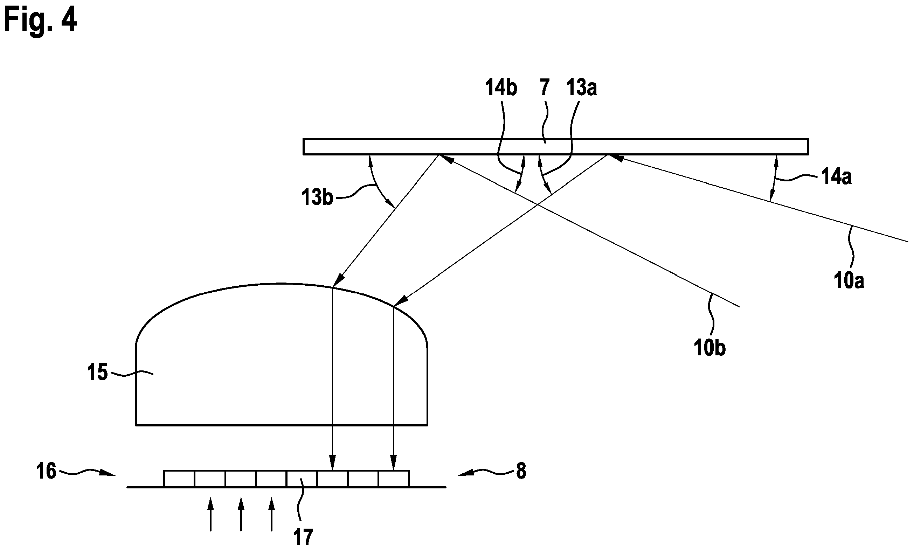

Fig. 4 zeigt den Empfangspfad einer ToF-Kamera mit einem Lichtstrahl über ein Hologramm und ein optisches Element. Hierbei ist ein beispielhafter Empfangspfad von zwei Lichtstrahlen 10a bzw. 10b gezeigt, die unter den Winkeln 14a bzw. 14b auf das Hologramm 7 auftreffen. Die Strahlen werden am Hologramm 7 entsprechend gebeugt und werden unter dem Winkel 13a, bzw. 13b in Richtung des Sensors 8 weitergeleitet. Im weiteren Verlauf muss das vom Sensor 8 aufzufangende Licht geeignet umgelenkt werden, damit Teile der Pixel 17 eines ToF-Imagers 16 des Sensors 8 für diesen Pfad eingesetzt werden können. Dies geschieht durch ein Objektiv 15. An diesem Objektiv 15 werden die Lichtstrahlen 10a, bzw. 10b gebrochen und in Richtung des Sensors 8 gelenkt. Diese Pixel 17 müssten separat kalibriert bzw. die von ihnen erfassten Informationen im Rahmen einer Nachbearbeitung (Postprocessing) entsprechend zurückgerechnet werden, um die Umlenkungen durch das Hologramm 7 zu berücksichtigen. Wenn der Erfassungsbereich (Field of View, FoV) des Sensors groß genug ist, kann auf zusätzliche optische Elemente verzichtet werden. Bei einer TOF-Kamera sind ausgesandtes und empfangenes Licht in vorteilhafter Weise aufeinander abgestimmt. Ansonsten kann eine Lichtlaufzeit o.ä. und damit die zugehörige Entfernung (Tiefeninformation) nicht bestimmt werden.

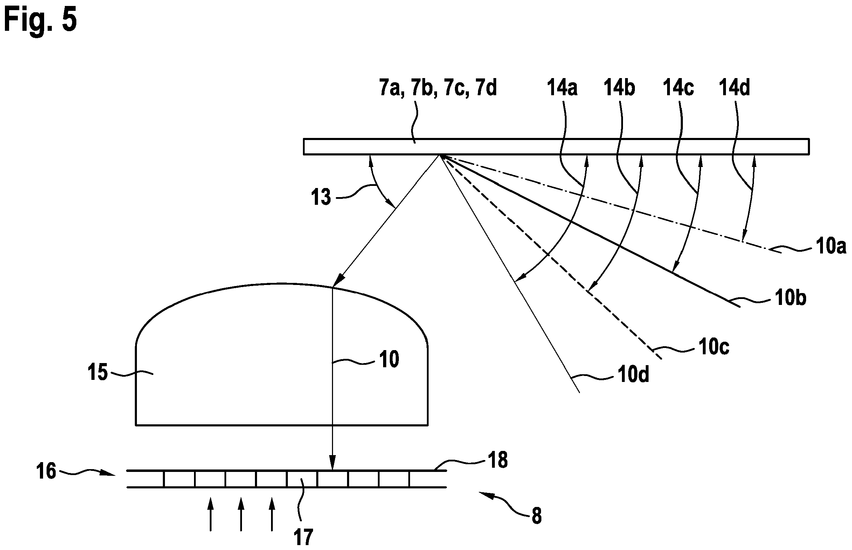

Fig. 5 zeigt den Empfangspfad einer ToF-Kamera mit mehreren Lichtstrahlen entlang einem Hologramm und einem optischen Element sowie einem Farbfilter. Diese Ausführungsform umfasst die Verwendung von polychromatischem Licht. Dabei kann sowohl mit einer spektral breiten Lichtquelle als auch mit mehreren definierten Wellenlängen oder einer Lichtquelle, die zwar spektral schmalbandig emittiert, deren Wellenlänge aber durchgestimmt werden kann, gearbeitet werden. Für jede zu nutzende Wellenlänge wird ein Hologramm benötigt. Entsprechend werden in der dargestellten Ausführungsform mehrere Hologramme 7a, 7b, 7c, 7d überlagert. Hierbei können werden mehrere Beugungswinkel (z.B. für die Erfassung unterschiedlicher Sitzpositionen) durch mehrere Hologramme für mehrere Wellenlängen überwacht werden. Dabei entspricht jede Wellenlänge einem Beugungswinkel. Die Auflösung des Systems wird dabei u.a. durch die Anzahl der Hologramme definiert. Zur technischen Beschreibung sei weiterhin auf die Ausführungen zu Fig. 3 verwiesen. Auf Seiten des Detektors kann die Wellenlängenseparation mittels einem Farbfilter 18 realisiert werden. Der Farbfilter 18 ist vorteilhafterweise realisiert als diffraktives Element. Unterschiedlichen Pixeln kann dabei jeweils ein Farbfilter zugeordnet werden. Dabei wird der überlagerte Strahl spektral aufgefächert und jedem Pixel oder Pixelbereich eine definierte Wellenlänge "zugeteilt".

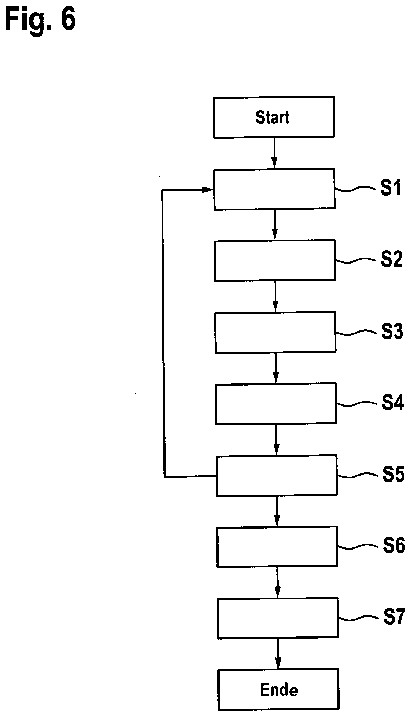

Fig. 6 zeigt die Verfahrensschritte einer beispielhaften Ausprägung des Verfahrens. Das Verfahren beginnt dabei bspw. beim Starten des Fahrzeugs oder bei Aktivierung einer Assistenzfunktion oder Überwachungsfunktion. In einem ersten Verfahrensschritt S1 wird bspw. eine polychromatische Lichtquelle angesteuert, so dass polychromatisches Licht aus einer Lichtquelle emittiert wird. Dieses Licht wird an einem Objektiv zwischen Lichtquelle und Hologramm in Richtung des Hologramms umgelenkt. In einem zweiten Schritt S2 wird das Licht am Hologramm entsprechend der Winkel- und Wellenselektivität des Hologramms gebeugt. Die entsprechenden Lichtstrahlen einer bestimmten Wellenlänge werden unter einem bestimmten Winkel in einen definierten Teilbereich des Innenraums zur Beleuchtung weitergeleitet. In einem Schritt S3 erfolgt die Informationsaufnahme des Teilbereichs, bzw. der Insassen sowie deren Position, Körperhaltung, Gestik, Mimik, oder ähnliches. Die Lichtstrahlen werden an den Objekten reflektiert und in Richtung des Hologramms zurückgeleitet. In einem Schritt S4 erfolgt wiederum die Beugung am Hologramm entsprechend dessen Winkel- und Wellenselektivität. Die zurückgeleiteten Lichtstrahlen werden erneut am Objektiv umgelenkt, diesmal in Richtung des Bildsensors. Der Bildsensor kann bspw. eine Time-of-Flight Kamera mit entsprechendem Imager sein. In einem nächsten Schritt S5 erfolgt die Datenaufnahme des Lichtes mittels dem Bildsensor. Das Verfahren wird im Anschluss mit Schritt S1 weitergeführt. Weiterhin erfolgt nach dem Schritt S5 eine Analyse des Datenmaterials in einem Schritt S6, bspw. mittels einem Steuergerät. Aus dem Datenmaterial können entsprechende Informationen abgeleitet werden, die bspw. als Input für weitere Verfahrensschritte verwendet werden. Bspw. können in einem Schritt S7 passive Sicherheitssysteme, wie bspw. Airbags oder Gurtsysteme an die Körperhaltung des Insassen angepasst werden. Hierbei ist sogar eine Abschaltung eines passiven Sicherheitssystems denkbar, wenn dies die Sicherheit des Insassen steigert. Natürlich ist auch eine automatische Steuerung und Anpassung von Komfort- und Infotainment-Funktionen möglich.

## Patentansprüche

1. Kraftfahrzeug mit einer Vorrichtung zur Ermittlung von Informationen in zumindest einem Teilbereich (4) eines Innenraumes (3) des Kraftfahrzeugs (1), wobei das Kraftfahrzeug (1) eine Lichtquelle (9) zur Beleuchtung des Innenraums (3) aufweist und die Beleuchtung mittels Lichtstrahlen (10) erfolgt, welche durch die Lichtquelle (9) emittiert werden, wobei die Lichtstrahlen (10) einem Sendepfad von der Lichtquelle (9) hin zu dem zu beleuchtenden Teilbereich (4) des Innenraums (3) folgen, wobei das Kraftfahrzeug (1) einen Sensor (8) zur Informationserfassung aufweist und die Informationserfassung mittels Lichtstrahlen (10) erfolgt, welche Daten bezüglich des Teilbereichs (4) des Innenraums (3) enthalten, wobei die Lichtstrahlen (10) einem Empfangspfad von dem beleuchteten Teilbereich (4) des Innenraums (3) hin zu dem Sensor (8) folgen und wobei ein Hologramm (7) zur Beugung der Lichtstrahlen (10) vorhanden und derart positioniert ist, dass das Hologramm (7) ein Beugen der Lichtstrahlen (10) sowohl entlang des Sendepfades als auch entlang des Empfangspfades ermöglicht, **dadurch gekennzeichnet, dass** das Hologramm (7) als Reflexionshologramm ausgebildet ist und dass das Hologramm (7) am Fahrzeughimmel (6) positioniert ist.

2. Kraftfahrzeug nach Anspruch 1, **dadurch gekennzeichnet, dass** der Sensor (8) zur Informationserfassung eine 3D-Kamera umfasst.

3. Kraftfahrzeug nach einem der vorhergehenden Ansprüche, **dadurch gekennzeichnet, dass** die von der Lichtquelle (9) emittierten Lichtstrahlen (10) an einem optischen Element (15) in Richtung des Hologramms (7) umgelenkt werden.

4. Kraftfahrzeug nach einem der vorhergehenden Ansprüche, **dadurch gekennzeichnet, dass** mehrere Hologramme (7) vorhanden sind und insbesondere, dass verschiedene Hologramme (7) unterschiedliche Lichtwellenlängen beugen.

5. Kraftfahrzeug nach Anspruch 4, **dadurch gekennzeichnet, dass** die Hologramme (7) als Multiplex-Hologramme oder als Schichtstapel-Einzelhologramme oder als eine Kombination von Multiplex-Hologramme und Schichtstapel-Einzelhologramme ausgebildet sind.

6. Kraftfahrzeug nach einem der vorhergehenden Ansprüche, **dadurch gekennzeichnet, dass** die zur Beleuchtung emittierten Lichtstrahlen (10) unterschiedliche Lichtwellenlängen aufweisen.

7. Kraftfahrzeug nach einem der vorhergehenden Ansprüche, **dadurch gekennzeichnet, dass** die Lichtstrahlen (10) als polychromatisches Licht ausgebildet sind, wobei insbesondere wenigstens eine der folgenden Arten einer Lichtquelle (9) eingesetzt werden:
- eine spektral breite Lichtquelle (9) zur Erzeugung des polychromatischen Lichts,
- eine Lichtquelle (9) mit mehreren definierten Lichtwellenlängen zur Erzeugung des polychromatischen Lichts,
- eine spektral schmalbandig emittierende Lichtquelle (9) zur Erzeugung des polychromatischen Lichts, deren Lichtwellenlänge durchgestimmt werden kann.

8. Kraftfahrzeug nach einem der vorhergehenden Ansprüche, **dadurch gekennzeichnet, dass** mehrere Lichtquellen (9) vorhanden sind, und insbesondere, dass mehrere Lichtquellen (9) vorhanden sind, wobei diese Lichtstrahlen (10) mit unterschiedlichen Lichtwellenlängen emittieren.

9. Kraftfahrzeug nach einem der vorhergehenden Ansprüche, **dadurch gekennzeichnet, dass** ein Farbfilter (18) vorhanden ist, insbesondere, dass ein schaltbarer Farbfilter (18) zur Selektion definierter Lichtwellenlängen vorhanden ist.

10. Kraftfahrzeug nach einem der vorhergehenden Ansprüche, **dadurch gekennzeichnet, dass** mehrere Sensoren (8) vorhanden sind und insbesondere, dass mehrere Sensoren (8) zur Erfassung unterschiedlicher Lichtwellenlängen vorhanden sind.

11. Verfahren zur Ermittlung von Informationen in zumindest einem Teilbereich (4) eines Innenraumes (3) eines Kraftfahrzeugs (1), wobei das Kraftfahrzeug (1) eine Lichtquelle (9) zur Beleuchtung des Innenraums (3) aufweist und die Lichtquelle (9) Lichtstrahlen (10) emittiert, welche einem Sendepfad folgend den Teilbereich (4) des Innenraums (3) beleuchten, in welchem die Ermittlung der Informationen erfolgen soll, wobei das Kraftfahrzeug (1) einen Sensor (8) zur Informationserfassung aufweist und der Sensor (8) Lichtstrahlen (10) empfängt, welche einem Empfangspfad folgend Daten bezüglich des Teilbereichs (4) des Innenraums (3) transportieren, und wobei Lichtstrahlen (10) zur Ermittlung von Informationen des Teilbereichs (4) an einem Hologramm (7) gebeugt werden, wobei das Hologramm (7) derart positioniert ist, dass die Lichtstrahlen (10) sowohl entlang des Sendepfades als auch entlang des Empfangspfades an dem Hologramm (7) gebeugt werden, **dadurch gekennzeichnet, dass** das Hologramm (7) am Fahrzeughimmel (6) positioniert ist und dass das Hologramm (7) als Reflexionshologramm ausgebildet ist.

12. Verfahren nach Anspruch 11, **dadurch gekennzeichnet, dass** eine Ermittlung von dreidimensionalen Daten des Teilbereichs (4) des Innenraums (3) mittels einer 3D-Kameras erfolgt, wobei ein optischer Pfad der 3D-Kamera sowohl in Sende- als auch in Empfangsrichtung an dem Hologramm (7) umgelenkt wird, wobei das Hologramm (7) insbesondere am Fahrzeughimmel (6) positioniert ist.

13. Verfahren nach einem der Ansprüche 11 bis 12, **dadurch gekennzeichnet, dass** Informationen aus dem Teilbereich (4) des Innenraums mittels am Hologramm (7) gebeugter Lichtstrahlen (10) ermittelt werden und zusätzlich Informationen aus einem anderen Teilbereich (5) des Innenraums (3) mittels direkter Lichtstrahlen (10) ermittelt werden.

14. Verfahren nach einem der Ansprüche 11 bis 13, **dadurch gekennzeichnet, dass** Informationen aus verschiedenen Teilbereichen (4) des Innenraums (3) ermittelt werden, wobei mehrere Hologramme (7) eingesetzt werden und verschiedene Hologramme (7) unterschiedliche Lichtwellenlängen beugen, und die Informationsermittlung für jeden Teilbereich (4) über Lichtstrahlen (10) mit einer jeweils definierten Lichtwellenlänge erfolgt.

## Claims

1. Motor vehicle having an apparatus for ascertaining information in at least one partial region (4) of an interior space (3) of the motor vehicle (1), wherein the motor vehicle (1) has a light source (9) for illuminating the interior space (3) and the illumination is effected by means of light beams (10) emitted by the light source (9), wherein the light beams (10) follow a transmission path from the light source (9) to the partial region (4) of the interior space (3) that is to be illuminated, wherein the motor vehicle (1) has a sensor (8) for capturing information and the information is captured by means of light beams (10) containing data relating to the partial region (4) of the interior space (3), wherein the light beams (10) follow a reception path from the illuminated partial region (4) of the interior space (3) to the sensor (8) and wherein a hologram (7) for diffracting the light beams (10) is present and positioned such that the hologram (7) enables diffraction of the light beams (10) both along the transmission path and also along the reception path, **characterized in that** the hologram (7) is in the form of a reflection hologram and
**in that** the hologram (7) is positioned at the vehicle headliner (6).

2. Motor vehicle according to Claim 1, **characterized in that** the sensor (8) for capturing information comprises a 3D camera.

3. Motor vehicle according to either of the preceding claims, **characterized in that** the light beams (10) emitted by the light source (9) are deflected at an optical element (15) in the direction of the hologram (7) .

4. Motor vehicle according to any of the preceding claims, **characterized in that** a plurality of holograms (7) are present and in particular **in that** different holograms (7) diffract different light wavelengths.

5. Motor vehicle according to Claim 4, **characterized in that** the holograms (7) are in the form of multiplex holograms or layer-stack individual holograms or a combination of multiplex holograms and layer-stack individual holograms.

6. Motor vehicle according to any of the preceding claims, **characterized in that** the light beams (10) emitted for illumination purposes have different light wavelengths.

7. Motor vehicle according to any of the preceding claims, **characterized in that** the light beams (10) are in the form of polychromatic light, wherein in particular at least one of the following types of light source (9) is used:
- a spectrally broad light source (9) for producing the polychromatic light,
- a light source (9) with a plurality of defined light wavelengths for producing the polychromatic light,
- a light source (9) emitting in the spectral narrowband for producing the polychromatic light, whose light wavelength can be tuned.

8. Motor vehicle according to any of the preceding claims, **characterized in that** a plurality of light sources (9) are present and in particular **in that** a plurality of light sources (9) are present, wherein they emit light beams (10) with different light wavelengths.

9. Motor vehicle according to any of the preceding claims, **characterized in that** a colour filter (18) is present, in particular **in that** a switchable colour filter (18) for selecting defined light wavelengths is present.

10. Motor vehicle according to any of the preceding claims, **characterized in that** a plurality of sensors (8) are provided and in particular **in that** a plurality of sensors (8) for capturing different light wavelengths are provided.

11. Method for ascertaining information in at least one partial region (4) of an interior space (3) of a motor vehicle (1), wherein the motor vehicle (1) has a light source (9) for illuminating the interior space (3) and the light source (9) emits light beams (10) that, by following a transmission path, illuminate the partial region (4) of the interior space (3) in which the information is to be ascertained,
wherein the motor vehicle (1) has a sensor (8) for capturing information and the sensor (8) receives light beams (10) which, by following a reception path, transport data relating to the partial region (4) of the interior space (3),
and wherein light beams (10) for ascertaining information about the partial region (4) are diffracted at a hologram (7), wherein the hologram (7) is positioned such that the light beams (10) both along the transmission path and also along the reception path are diffracted at the hologram (7), **characterized**
**in that** the hologram (7) is positioned at the vehicle headliner (6)
and **in that** the hologram (7) is in the form of a reflection hologram.

12. Method according to Claim 11, **characterized in that** three-dimensional data of the partial region (4) of the interior space (3) are ascertained by means of a 3D camera, wherein an optical path of the 3D camera is deflected at the hologram (7) both in the transmission and in the reception direction, wherein the hologram (7) is positioned in particular at the vehicle headliner (6).

13. Method according to either of Claims 11 to 12, **characterized in that** information from the partial region (4) of the interior space is ascertained by means of light beams (10) diffracted at the hologram (7) and in addition information from a different partial region (5) of the interior space (3) is ascertained by means of direct light beams (10).

14. Method according to any of Claims 11 to 13, **characterized in that** information from different partial regions (4) of the interior space (3) is ascertained, wherein a plurality of holograms (7) are used and different holograms (7) diffract different light wavelengths, and the information for each partial region (4) is ascertained via light beams (10) with a respectively defined light wavelength.

## Revendications

1. Véhicule automobile comprenant un dispositif destiné à déterminer des informations dans au moins une zone partielle (4) d'un habitacle (3) du véhicule automobile (1), le véhicule automobile (1) comportant une source de lumière (9) destinée à éclairer l'habitacle (3) et l'éclairage étant effectué au moyen de rayons lumineux (10) qui sont émis par la source de lumière (9), les rayons lumineux (10) suivant un chemin d'émission allant de la source de lumière (9) en direction de la zone partielle (4) à éclairer de l'habitacle (3),
le véhicule automobile (1) comportant un capteur (8) destiné à acquérir des informations et l'acquisition d'informations étant effectuée au moyen de rayons lumineux (10) qui contiennent des données relatives à la zone partielle (4) de l'habitacle (3),
les rayons lumineux (10) suivant un chemin de réception allant de la zone partielle éclairée (4) de l'habitacle (3) en direction du capteur (8)
et un hologramme (7) étant présent pour diffracter les rayons lumineux (10) et étant positionné de manière à ce que l'hologramme (7) permette une diffraction des rayons lumineux (10) aussi bien le long du chemin d'émission que du chemin de réception, **caractérisé en ce que**
l'hologramme (7) est conçu comme un hologramme de réflexion et
l'hologramme (7) est positionné sur le l'habillage intérieur (6) du toit de véhicule.

2. Véhicule automobile selon la revendication 1, **caractérisé en ce que** le capteur (8) d'acquisition d'informations comprend une caméra 3D.

3. Véhicule automobile selon l'une des revendications précédentes, **caractérisé en ce que** les rayons lumineux (10) émis par la source de lumière (9) sont déviés au niveau d'un élément optique (15) en direction de l'hologramme (7).

4. Véhicule automobile selon l'une des revendications précédentes, **caractérisé en ce que** plusieurs hologrammes (7) sont présents et notamment **en ce que** différents hologrammes (7) diffractent différentes longueurs d'onde de lumière.

5. Véhicule automobile selon la revendication 4, **caractérisé en ce que** les hologrammes (7) sont réalisés sous la forme d'hologrammes multiplex ou d'hologrammes individuels à empilement en couches ou d'une combinaison d'hologrammes multiplex et d'hologrammes individuels à empilement en couches.

6. Véhicule automobile selon l'une des revendications précédentes, **caractérisé en ce que** les rayons lumineux (10) émis pour l'éclairage ont des longueurs d'onde de lumière différentes.

7. Véhicule automobile selon l'une des revendications précédentes, **caractérisé en ce que** les rayons lumineux (10) sont conçus comme une lumière polychromatique, au moins un des types de source de lumière (9) suivants étant notamment utilisé :
- une source de lumière spectralement large (9) pour générer la lumière polychromatique,
- une source de lumière (9) à plusieurs longueurs d'ondes de lumière définies pour générer la lumière polychromatique,
- une source de lumière à bande spectralement étroite (9) pour générer la lumière polychromatique, dont la longueur d'onde de lumière peut être accordée.

8. Véhicule automobile selon l'une des revendications précédentes, **caractérisé en ce que** plusieurs sources de lumière (9) sont présentes, et notamment **en ce que** plusieurs sources de lumière (9) sont présentes, ces rayons lumineux (10) émettant avec des longueurs d'onde de lumière différentes.

9. Véhicule automobile selon l'une des revendications précédentes, **caractérisé en ce qu'**un filtre coloré (18) est présent, en particulier **en ce qu'**un filtre coloré commutable (18) est présent pour sélectionner des longueurs d'onde de lumière définies.

10. Véhicule automobile selon l'une des revendications précédentes, **caractérisé en ce que** plusieurs capteurs (8) sont présents et en particulier **en ce que** plusieurs capteurs (8) destinés à détecter différentes longueurs d'onde de lumière sont présents.

11. Procédé de détermination d'informations dans au moins une zone partielle (4) d'un habitacle (3) d'un véhicule automobile (1), le véhicule automobile (1) comportant une source de lumière (9) destinée à éclairer l'habitacle (3) et la source de lumière (9) émettant des rayons lumineux (10) qui, en suivant un chemin d'émission, éclairent la zone partielle (4) de l'habitacle (3) dans lequel la détermination des information doit être effectuée,
le véhicule automobile (1) comportant un capteur (8) destiné à l'acquisition d'informations et le capteur (8) recevant des rayons lumineux (10) qui transportent des données relatives à la zone partielle (4) de l'habitacle (3) en suivant un chemin de réception,
et des rayons lumineux (10) étant diffractés au niveau d'un hologramme (7) pour déterminer des informations sur la zone partielle (4), l'hologramme (7) étant positionné de manière à ce que les rayons lumineux (10) soient diffractés au niveau de l'hologramme (7) aussi bien le long du chemin d'émission que du chemin de réception, **caractérisé en ce que**
l'hologramme (7) est positionné sur l'habillage intérieur (6) du toit de véhicule,
et l'hologramme (7) est conçu comme un hologramme de réflexion.

12. Procédé selon la revendication 11, **caractérisé en ce que** la détermination des données tridimensionnelles de la zone partielle (4) de l'habitacle (3) est effectuée au moyen d'une caméra 3D, un chemin optique de la caméra 3D étant dévié au niveau de l'hologramme (7) aussi bien dans la direction d'émission que dans la direction de réception, l'hologramme (7) étant positionné notamment au niveau de l'habillage (6) du toit de véhicule.

13. Procédé selon l'une des revendications 11 à 12, **caractérisé en ce que**
des informations provenant de la zone partielle (4) de l'habitacle sont déterminées au moyen de rayons lumineux (10) diffractés au niveau de l'hologramme (7) et de plus des informations provenant d'une autre zone partielle (5) de l'habitacle (3) sont déterminées au moyen de rayons lumineux directs (10).

14. Procédé selon l'une des revendications 11 à 13, **caractérisé en ce que**
des informations provenant de différentes zones parties (4) de l'habitacle (3) sont déterminées, plusieurs hologrammes (7) étant utilisés et différents hologrammes (7) diffractant différentes longueurs d'onde de lumière, et la détermination d'informations pour chaque zone partielle (4) étant effectuée par le biais de rayons lumineux (10) ayant chacun une longueur d'onde de lumière définie.
